# EUROPÄISCHE PATENTSCHRIFT

(11) **EP 1 288 235 B1**
(45) Veröffentlichungstag und Bekanntmachung des Hinweises auf die Patenterteilung: **20.02.2008**
(21) Anmeldenummer: 02014737.7
(22) Anmeldetag: 03.07.2002
(51) Int. Cl.: C08F 230/08, C08L 43/04, C08F 255/00

(54) **Mittel für die Verbesserung der Scorch-Bedingungen bei der Herstellung gepfropfter und/oder vernetzter Polymere sowie gefüllter Kunststoffe**
Agents for the improvement of the vulcanisation behaviour in the preparation of grafted or crosslinked polymers and filled resins
Agents pour améliorer le processus de vulcanisation lors de la préparation de polymères greffés ou réticulés et de résines chargées

(30) Priorität: 30.08.2001 DE 10142555
(43) Veröffentlichungstag der Anmeldung: 05.03.2003
(73) Patentinhaber: Evonik Degussa GmbH, 40474 Düsseldorf (DE)
(72) Erfinder: Schlosser, Thomas, Dr., 79594 Inzlingen (DE); Ioannidis, Aristidis, 79618 Rheinfelden (DE)

(56) Entgegenhaltungen:
- US-A- 2 702 798
- US-A- 3 900 679
- US-A- 4 730 031

## Beschreibung

Die vorliegende Erfindung betrifft ein Mittel bzw. eine Zusammensetzung zur Verbesserung der Scorch-Bedingungen bei der Herstellung gepfropfter und/oder vernetzter Polymere sowie gefüllter Kunststoffe, wobei das Mittel eine Silicium-enthaltende Verbindung, einen Radikalstarter und einen Radikalfänger enthält. Auch betrifft die vorliegende Erfindung Polymere sowie gefüllte Kunststoffe, die unter Verwendung einer solchen Zusammensetzung erhältlich sind, entsprechende Verfahren zur Herstellung besagter Polymere und Kunststoffe, und Artikel, die auf diesen Polymeren oder Kunststoffen basieren.

Es ist bekannt, dass man bei der Herstellung feuchtigkeitsvernetzbarer Polymere Silane in Gegenwart einer Erzeugersubstanz von Radikalen (ESR) auf Polymerketten pfropfen kann und anschließend, nach der Formgebung, die Feuchtigkeitsvernetzung durchführt.

Es ist auch bekannt, dass man bei der Herstellung hoch gefüllter Polymer-Füllstoffsysteme, d. h. gefüllte Kunststoffe, Silane in Gegenwart einer ESR auf Polymerketten pfropft und somit erst die Kompatibilität der anorganischen und organischen Komponenten ermöglicht bzw. verbessert.

Der Begriff "Scorch" beinhaltet den Verarbeitungszeitraum einer zur Pfropfung und/oder Vernetzung in Herstellung bzw. Verarbeitung befindlichen ESRenthaltenden Polymermischung bis zum Einsetzen der durch ESR bedingten Reaktion. Hierbei ist von Nachteil, dass insbesondere beim Einsatz von Polymertypen, welche empfindlich auf Radikalkontakt reagieren, beispielsweise Polyethylen (PE) mit enger Molmassenverteilung und/oder hohem Molekulargewicht, Polypropylen (PP), Ethylen-Vinylacetat-Copolymerisat (EVA) mit einem Gehalt an Vinylacetat (VA) von 0 bis 40 Gew.-%, Ethylenpropylendienterpolymer (EPDM, "Gummi") oder Ethylenpropylendien-Elastomer (EPM), eine teilweise Absättigung der Radikale durch unerwünschte Nebenreaktionen bereits in den Verarbeitungsanlagen erfolgt. Dabei resultieren u. a. niedrige Reaktionsumsätze, ungleichmäßige Verteilung der umgesetzten Einsatzkomponenten, niedrige Ausstoßraten wegen unerwünschter Viskositätserhöhung der zu verarbeitenden Kunststoffmasse sowie feste Partikel, die sich ungünstig auf die Produktqualität auswirken.

Die Feuchtigkeitsvernetzung von Polymeren mit hydrolysierbaren ungesättigten Silanen wird weltweit zur Herstellung von Kabeln, Rohren, Schäumen usw. eingesetzt. Verfahren dieser Art sind unter den Namen Sioplas-Prozess (DE 19 63 571 C3, DE 21 51 270 C3, US 3,646,155) und Monosil-Prozess (DE 25 54 525 C3, US 4,117,195) bekannt. Während beim Monosil-Verfahren der Vernetzungskatalysator bereits beim ersten Verarbeitungsschritt zugesetzt wird, erfolgt beim Sioplas-Verfahren der Zusatz des Vernetzungskatalysators erst im zweiten Schritt.

Bei der Anwendung von hochgefüllten thermoplastischen und/oder feuchtigkeitsvernetzbaren Kunststoffmischungen werden PE und/oder EVA und/oder EPDM und/oder EPM und/oder PP mit Zusammensetzungen aus ungesättigten Silanestern in Gegenwart von ESR chemisch modifiziert, wobei vorher, zeitgleich oder zu einem späteren Zeitpunkt anorganische Füllstoffe beigemengt werden können.

Die chemische Modifizierung der Polymere erfolgt durch Ankopplung (Pfropfung) der Silanester an die Polymerkette über radikalische Addition. Zunächst wird verfahrenstechnisch eine Homogenisierung der Einsatzstoffe angestrebt, wobei die Degradation der ESR in dieser Phase unerwünscht ist. Über eine temperaturkontrollierte Verarbeitung wird die Zerfallsreaktion geregelt. In der Regel kann die Temperatur der Reaktionskomponenten bzw. der Reaktionsmischung innerhalb des Kunststoffreaktors oder Extruders nur über die Gehäusetemperatur oder durch innen liegende Anlagenteile geregelt werden. Einflüsse innerhalb der Homogenisierungszone, beispielsweise Scherkräfte, initiieren lokale Temperaturspitzen, die die kritische Verarbeitungstemperatur des ESR überschreiten. Ein weiterer Punkt ist die Zerfallscharakteristik der Peroxide selbst. Idealerweise sollte der Reaktionsverlauf einer Sprungfunktion entsprechen. Dieser Reaktionsablauf trifft für das jeweils verwendete Peroxid nur für relativ hohe Temperaturen zu. Aufgrund der Tatsache, dass die Kunststoffschmelze nicht schlagartig auf die benötigte Reaktionstemperatur punktgenau und dort nivelliert werden kann, sondern einen Temperaturgradienten durchläuft, erfolgt der Reaktionsumsatz des ESR verzögert, wobei der Reaktionsverlauf in der Regel durch eine mehr oder weniger flache "S-förmige Kurve" zu beschreiben ist. Beide Faktoren haben zur Folge, dass schon während der Homogenisierungsphase Radikale entstehen, die wiederum zu unerwünschten Nebenreaktionen führen, wie z. B. C-C-Verknüpfungen von Polymerketten sowie lokale Konzentrationsspitzen an gepfropften Silanestern, um nur einige Beispiele zu nennen.

Bisher wird diesen Nachteilen - mit nur wenig zufrieden stellendem Erfolg - dadurch begegnet, dass unterschiedlichen Verarbeitungsanforderungen folgend ESR unterschiedlicher Zerfallstemperatur eingesetzt werden. Dadurch wird zwar die "schleichende" ESR-Degradation zu höherer Temperatur hin verschoben, d. h. "pre-scorch", die ungünstige Zerfallscharakteristik bleibt aber im Wesentlichen erhalten. Unter dem Begriff pre-scorch ist im Allgemeinen eine unerwünschte Vorvernetzung während des Herstellprozesses der Mischung bzw. Formgebung zu verstehen.

Diese Problemstellung wird beispielsweise von J. Groepper ("Scorch-verzögernde Peroxide für die Vernetzung von Elastomeren und Polyolefinen", GAK 2/1994, Jahrgang 47, Seiten 83 bis 88) im Zusammenhang mit der Peroxidvernetzung von Elastomeren und Polyethylenen eingehend diskutiert. Auch hier werden zunächst die für die Vernetzung bestimmten ESR in eine Polymermatrix eingearbeitet und anschließend durch Temperaturerhöhung die Polymermatrix vernetzt. Als Ansatz zur Lösung der "Scorch-Problematik" wird hier der Einsatz von so genannten ESR-SR (SR = "scorch retardant", d. h. vernetzungsunterdrückend) beschrieben. Auch EP 0 346 863 A1 sowie JP-A 09-302 043 offenbaren die Verwendung von Hydrochinonderivaten als Radikalfänger. Hydrochinonderivate besitzen im Allgemeinen den Nachteil einer sehr mäßigen bis schlechten Löslichkeit in Vinylsilanen, z. B. Vinyltrimethoxysilan (VTMO). Die Kombination hoher Peroxidgehalte + Hydrochinon als SR-Komponente, wie sie in JP-A 09-302 043 beschrieben ist, kann auch zu einer schlechteren Verarbeitbarkeit der Extrusionsmasse führen. So konnten mit der in JP-A 09-302 043 beschriebenen Mischung keine Extrusionsversuche durchgeführt werden, da die Mischung zu einem Extruderausfall aufgrund einer nicht mehr extrusionsfähigen Masse führte.

Der vorliegenden Erfindung lag daher die Aufgabe zugrunde, eine weitere Möglichkeit bereitzustellen, die "Scorch"-Problematik in den Griff zu bekommen. Ein besonderes Anliegen war es auch, möglichst homogene Produkte auf Polymerbasis bzw. auf Basis gefüllter Kunststoffe bereitstellen zu können.

Die gestellte Aufgabe wird erfindungsgemäß entsprechend den Angaben der Patentansprüche gelöst.

Überraschenderweise wurde gefunden, dass man ein Mittel, das mindestens eine Silicium-enthaltende Verbindung, mindestens einen peroxidischen Radikalstarter und mindestens einen konjugierten Kohlenwasserstoff und/oder ein organofunktionelles Silan mit einer konjugierten Kohlenwasserstoffgruppe, in einfacher und wirtschaftlicher Weise zur Verbesserung der Scorch-Bedingungen bei der Herstellung gepfropfter und/oder vernetzter Polymere sowie gefüllter Kunststoffe einsetzen kann. So ermöglicht der Einsatz einer erfindungsgemäßen Zusammensetzung eine nochmalige Verbesserung bei der Herstellung und Verarbeitung gepfropfter und/oder feuchtigkeitsvernetzbarer Polymere, Polymerzubereitungen sowie gefüllter Kunststoffe, wobei in vorteilhafter Weise die Neigung, dass bereits vor einer Homogenisierung der Einsatzstoffe ein vorzeitiger unerwünschter Zerfall der ESR erfolgt bzw. unerwünschte Pfropfung einsetzt, deutlich reduziert wird und darüber hinaus sehr homogenes Produktmaterial erhalten wird. Auch kann die Produktqualität zeitlich versetzt hergestellter Chargen noch besser reproduziert werden. So sind durch den Einsatz erfindungsgemäßer Mittel insbesondere gepfropftes und/oder silanvernetztes PE, PP, Polyolefincopolymer, EVA, EPDM, EPM in vorteilhafter Weise erhältlich. Die vorliegende Erfindung zeichnet sich auch durch eine nur mäßige Viskositätserhöhung während der Herstellung bzw. Verarbeitung von Polymer- bzw. Kunststoffzubereitungen und/oder Polymer- bzw. Kunststoff-Formkörpern bei gleich bleibend hoher Produktqualität aus. Darüber hinaus führt die reduzierte Neigung zum "pre-scorch" auch zu weniger Ablagerungen, beispielsweise auf der Schnecke, was zusätzlich eine Verlängerung der Maschinenlaufzeiten und geringere Stillstandzeiten ermöglicht.

Gegenstand der vorliegenden Erfindung ist somit ein Mittel, das als Komponenten
(i) mindestens eine Silicium-enthaltende Verbindung,
(ii) mindestens einen peroxidischen Radikalstarter und
(iii) mindestens einen konjugierten Kohlenwasserstoff und/oder mindestens ein organofunktionelles Silan der allgemeinen Formel I

   R-Xₙ-C(R)=C(R)-C(R)=C(R)-Xₙ-Si(R¹)ₘ(OR²)₍₃₋ₘ₎ (I),

   worin Gruppen R gleich oder verschieden sind und R ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, R¹ lineare oder verzweigte Alkylgruppe mit 1 bis 4 C-Atomen ist, R² für eine lineare, verzweigte oder cyclische Alkylgruppe mit 1 bis 8 C-Atomen, vorzugsweise eine Methyl-, Ethyl-, n-Propyl- oder i-Propylgruppe, steht, Gruppen X gleich oder verschieden sind und X eine Gruppe aus der Reihe -CH₂-, -(CH₂)₂-, -(CH₂)₃-, -O(O)C(CH₂)₃- oder - C(O)O-(CH₂)₃- darstellt, n gleich 0 oder 1 und m gleich 0 oder 1 oder 2 oder 3 sind,
enthält.

Als Silicium-enthaltende Verbindung enthält das erfindungsgemäße Mittel als Komponente (i) mindestens eine Silicium-enthaltende Verbindung, welche eine Silicium-gebundene, ungesättigte Organogruppe trägt

Besonders bevorzugte Silicium-enthaltende Verbindungen als Komponente (i) sind solche der allgemeinen Formel II

(R³)₂C=C(R³)-Yₚ-Si(R⁴)ₜ(OR⁵)₍₃₋ₜ₎ (II),

worin Gruppen R³ gleich oder verschieden sind und R³ ein Wasserstoffatom oder eine Methylgruppe oder eine Phenylgruppe bedeutet, R⁴ eine Methylgruppe ist, R⁵ für eine Methyl-, Ethyl-, n-Propyl- oder i-Propylgruppe steht, Gruppen Y gleich oder verschieden sind und Y eine Gruppe aus der Reihe -CH₂-, -(CH₂)₂-, -(CH₂)₃-, -O(O)C(CH₂)₃- oder -C(O)O-(CH₂)₃- darstellt, p gleich 0 oder 1 und t gleich 0 oder 1 sind.

Ganz besonders vorzugsweise enthält das erfindungsgemäße Mittel als Komponente (i) Vinyltrimethoxysilan, Vinyltriethoxysilan, 3-Methacryloxypropyltriethoxysilan, 3-Methacryloxypropyltrimethoxysilan, Vinyltriacetoxysilan, und/oder Vinylethoxydimethoxysilan.

Darüber hinaus kann das erfindungsgemäße Mittel zusätzlich Alkylalkoxysilane, wie Methyltrimethoxysilan, Methyltriethoxysilan, Dimethyldimethoxysilan, Dimethyldiethoxysilan, Ethyltrimethoxysilan, Ethyltriethoxysilan, n-Propyltrimethoxysilan, n-Propyltriethoxysilan, i-Propyltrimethoxysilan, i-Propyltriethoxysilan, n-Butyltrimethoxysilan, n-Butyltriethoxysilan, i-Butyltrimethoxysilan, i-Butyltriethoxysilan, n-Octyltrimethoxysilan, n-Octyltriethoxysilan, i-Octyltrimethoxysilan, i-Octyltriethoxysilan, Hexadecyltrimethoxysilan, Hexadecyltriethoxysilan, sowie Fluoralkylalkoxysilane der Formel CₙF(₂ₙ₊₁)(CH₂)₂Si(OCₘH₂ₘ₊₁)₃ mit n = 4 bis 8 und m = 1 oder 2, wie Trifluor-1,1,2,2-tetrahydrobutyltrimethoxysilan (n = 4, m = 1), Trifluor-1,1,2,2-tetrahydrobutyltriethoxysilan (n = 4, m = 2), Nonafluor-1,1,2,2-tetrahydrohexyltrimethoxysilan (n = 6, m = 1), Nonafluor-1,1,2,2-tetrahydrohexyltriethoxysilan (n = 6, m = 2), Tridecafluor-1,1,2,2-tetrahydrooctyltrimethoxysilan, Tridecafluor-1,1,2,2-tetrahydrooctyltriethoxysilan (n = 8, m = 2), um nur einige Beispiele zu nennen - enthalten.

Als Komponente (ii) enthält das erfindungsgemäße Mittel mindestens einen Radikalstarter (ESR), wobei peroxidische Radikalstarter aus der Reihe Ditertiärbutylperoxid, Dicumylperoxid, Tertiärbutylcumylperoxid, 1,3-Di(2-tertiärbutylperoxy-isopropyl)benzol, 2,5-Dimethyl-2,5-bis(tertiärbutylperoxy)-hexin(3), Di-tertiäramylperoxid, 1,3,5-Tris(2-tertiärbutylperoxy-isopropyl)benzol, 1-Phenyl-1-tertiärbutylperoxyphthalid, α,α'-Bis(tertiärbutylperoxy)-diisopropyl-benzol und/oder 2,5-Dimethyl-2,5-ditertiärbutylperoxy-hexan bevorzugt eingesetzt werden.

Erfindungsgemäß enthält die vorliegende Zusammensetzung als Komponente (iii) mindestens einen konjugierten Kohlenwasserstoff und/oder mindestens ein organofunktionelles Silan der allgemeinen Formel (I), wodurch man die Scorch-Bedingungen in besonders vorteilhafter Weise gegenüber dem Stand der Technik verbessern kann.

Erfindungsgemäß verwendete konjugierten Kohlenwasserstoffe bestehen geeigneterweise aus einer ein- oder mehrfach ungesättigten Kohlenwasserstoffkette und mindestens einer aromatischen Kohlenwasserstoffgruppe, wobei der olefinische Teil der Verbindung geeigneterweise in Konjugation zum aromatischen Teil des Kohlenwasserstoffs steht.

Besonders vorzugsweise enthält das erfindungsgemäße Mittel mindestens einen konjugierten Kohlenwasserstoff aus der Reihe 1-Phenyl-penten-1, 2-Phenyl-penten-1, 2,4-Diphenyl-4-methyl-2-penten, 2,4-diphenyl-4-methyl-1-penten, trans,trans-1,4-Diphenyl-1,3-butadien, 1,2-Diphenylpenten-1, 1,3-Diphenylpenten-1, 1,4-Diphenylpenten-1, 1,5-Diphenylpenten-1, 1-Phenylpentadien-1,3, 2-Phenylpentadien-1,3, 3-Phenylpentadien-1,3, 4-Phenylpentadien-1,3, 5-Phenylpentadien-1,3, 1,2-Diphenylpentadien-1,3, 1,3-Diphenylpentadien-1,3, 1,4-Diphenylpentadien-1,3, 1,5-Diphenylpentadien-1,3.

Beispiele für Komponente (iii) die Verbindungen gemäß Formel (I) sind insbesondere aber nicht ausschließlich 1- und 2-(Trimethylsiloxy)-1,3-butadien, p-(t-Butyldimethylsiloxy)-styrol C₁₄H₂₂OSi, (m,p-Vinylbenzyloxy)trimethylsilan, (2,4-Pentadienyl)trimethylsilan, Styryl-Ethyl-tri-Methoxy-Silan.

Die Komponente (iii) des erfindungsgemäßen Mittels kann mindestens einen konjugierten Kohlenwasserstoff oder mindestens eine Verbindung gemäß Formel (I), ein Gemisch aus zwei oder mehreren konjugierten Kohlenwasserstoffen, ein Gemisch aus zwei oder mehreren Verbindungen der allgemeinen Formel (i) oder ein Gemisch aus mindestens einem Kohlenwasserstoff und mindestens einer Verbindung der allgemeinen Formel (I) darstellen.

Im erfindungsgemäßen Mittel beträgt das Gewichtsverhältnis zwischen den Komponenten (ii) und (iii) vorzugsweise 20 : 1 bis 1 : 15, besonders vorzugsweise 5 : 1 bis 1 : 2, ganz besonders vorzugsweise 4 : 1 bis 2 : 1.

Besonders vorzugsweise enthält das erfindungsgemäße Mittel die Komponenten Vinyltrimethoxysilan, Dicumylperoxid und 1,2-Diphenylpenten-1. Ebenfalls besonders bevorzugt ist die Zusammensetzung aus Vinyltrimethoxysilan, tert.-Butylcumylperoxid und 2,4-Diphenyl-4-methyl-2-penten.

Als weiteren Zusatzstoff kann das erfindungsgemäße Mittel gegebenenfalls mindestens einen Katalysator zur Vernetzung von auf Polymer gepfropfte Silyl-Gruppen enthalten. Solche Katalysatoren dienen üblicherweise zur beschleunigten Hydrolyse und Kondensation. Beispiele sind u. a. anorganische Säuren, organische Säuren, organische Basen, Carboxylate von Metallen, wie die des Zinns, Zinks, Eisens, Bleis, Cobalts, Zinn-organische Verbindungen, Titanester sowie mit PE kompatible Sulfonsäurederivate, um nur einige Beispiele anzuführen.

Bevorzugt verwendet man erfindungsgemäß als Komponente (iv) Di-n-butylzinnlaurat (DBTL), Dibutylzinndiacetat, Dioctyldibutylamin, Hexylamine, Pyridin, Chlorwasserstoffsäure, Schwefelsäure, Essigsäure, Stearinsäure, Maleinsäure, Maleinsäureanhydrid sowie Toluolsulfonsäuren.

Ferner kann das erfindungsgemäße Mittel als weitere Komponente mindestens einen thermischen Stabilisator enthalten, beispielsweise Pentaerythrityl-tetrakis [3-(3,5-bis(1,1-dimethylethyl)-4-hydroxyphenyl)propionate], Octadecyl-3-(3,5-di-tert.butyl-4-hydroxyphenyl)propionat sowie 4,4'-Bis-(1,1-dimethylbenzyl)-diphenylamin.

Auch kann das erfindungsgemäße Mittel als zusätzliche Komponente einen Metalldesaktivator enthalten, beispielsweise N,N'-Bis(3-(3,5-di-tert.butyl-4-hydroxyphenyl)-propionyl)hydrazin sowie Tris-(2-tert.butyl-4-thio(-2'-methyl-4-hydroxy-5'-tert.butyl)phenyl-5-methyl) phenylphosphit.

Im Allgemeinen bereitet man das erfindungsgemäße Mittel durch Mischen und Rühren der Einzelkomponenten zu, wobei die Zusammensetzung vorzugsweise 60 Gew.-% bis 99,9 Gew.-% mindestens einer Silicium-enthaltenden Verbindung, 0,05 bis 10 Gew.-% mindestens eines peroxidischen Radikalstarters, 0,01 bis 10 Gew.-% mindestens eines konjugierten Kohlenwasserstoffs, gegebenenfalls 0,1 bis 10 Gew.-%, vorzugsweise 2 bis 8 Gew.-%, als Katalysatorkomponente enthält. Die jeweiligen Mengenangaben beziehen sich auf das gesamte Mittel. Ferner ergeben alle Komponenten bzw. Bestandteile des Mittels zusammen 100 Gew.-%.

Üblicherweise verwendet man das erfindungsgemäße Mittel in flüssiger Form. Man kann das erfindungsgemäße Mittel aber auch auf einen porösen, partikelförmigen, quellbaren, gegebenenfalls schaumförmigen Träger, - beispielsweise Polyolefine, wie PE und PP, oder EVA oder Polymerblends -, aufbringen und quasi in "Trockenform" zur Vernetzung von Polymeren verwenden, wie es zum Beispiel in EP 0 426 073 A2 beschrieben wird.

Insbesondere verwendet man das erfindungsgemäße Mittel bei der Herstellung von gepfropften und/oder vernetzten Polymeren, von gefüllten Kunststoffen sowie von gefüllten vernetzten Kunststoffen.

Im Allgemeinen werden bei der Herstellung der Pfropfpolymerisate nach dem Sioplas-Verfahren das Polymer und das erfindungsgemäße Mittel in ein Aufbereitungsaggregat, z .B. in einen Extruder, gegeben. Das hier verwendete erfindungsgemäße Mittel enthält geeigneterweise mindestens die Komponenten (i), (ii) und (iii). Das Mittel kann über eine geeignete Dosiervorrichtung direkt in den Extruder eingespritzt werden oder alternativ zusammen mit dem Polymer in den Polymerzuführtrichter aufgegeben und dort mit dem Polymer intensiv vermengt werden. Die im Aufbereitungsaggregat ablaufenden chemischen Reaktionen werden über die Gehäusetemperatur gesteuert. Nach diesem 1. Verarbeitungsschritt wird das Produkt in der Regel granuliert und luft- und feuchtigkeitsdicht verpackt. Dieses so genannte Sioplas-Material wird dann in einem 2. Verarbeitungsschritt unter Zugabe eines Vernetzungskatalysators zum Endprodukt verarbeitet , beispielsweise zu Artikeln wie Granulat, Kabel, Rohre, usw. Zusätzlich kann man als Beispiele für weitere Kunststoffausformverfahren u. a. die Folienherstellung, Blasformen, Rotationsformen, Schäumen, Spritzgießen, Walzen sowie das Pressen nennen.

Bei Einstufenverfahren, wie Monosil-Verfahren, werden das Polymer und die die Vernetzung initiierende Mischung in den Extruder gegeben und die resultierende Masse in einem Schritt zum Endprodukt verarbeitet. Als erfindungsgemäßes Mittel setzt man dabei geeigneterweise eine Zubereitung ein, die mindestens die für dieses Verfahren notwendigen Komponenten (i), (ii), (iii) und (iv) bereits enthält.

Für die Herstellung gefüllter Kunststoffe wird der anorganische Füllstoff meist dem Aufbereitungsaggregat direkt zugeführt und mit dem Polymer zum Endprodukt verarbeitet. Optional kann der Füllstoff auch zu einem späteren Zeitpunkt in das Aggregat eingeführt werden, z. B. Zweischnecken-Extruder, Co-Kneter. Das unter Einsatz des erfindungsgemäßen Mittels erzeugte Pfropfpolymerisat ermöglicht eine deutliche Verbesserung der Kompatibilität von unpolarem Polymer und polarem Füllstoff, wie Aluminiumhydroxid. Daneben besteht die Möglichkeit, separat Pfropfpolymerisat, insbesondere Sioplas-Material, herzustellen, zu lagern und dieses dann als Basismaterial an einen Weiterverarbeiter, beispielsweise einem Kabelproduzenten, zu liefern, der seinerseits mit der Einarbeitung von Füllstoff gefüllte Kunststoffendprodukte herstellt.

So kann man in an sich bekannter Weise bei Einsatz des erfindungsgemäßen Mittels verbesserte Verarbeitsbedingungen erzielen und in sich sehr homogene Granulate bzw. Artikel, wie Formkörper, Kabel, Kabelisolierung, Kabelummantelung, Sanitär-, Trink- und Abwasserrohre, Warmwasserrohre, Schäume, Spritzgussartikel, Schrumpfartikel und vieles mehr, in nochmals verbesserter Qualität herstellen.

Gegenstand der vorliegenden Erfindung ist somit auch die Verwendung eines erfindungsgemäßen Mittels bei der Herstellung von gepfropften und/oder vernetzten Polymeren sowie bei der Herstellung gefüllter Kunststoffe.

Ferner sind Gegenstand der vorliegenden Erfindung der Sioplas-Prozess sowie der Monosil-Prozess, die durch den Einsatz eines erfindungsgemäßen Mittels gekennzeichnet sind.

Gegenstand der vorliegenden Erfindung sind ebenfalls Polymere, gefüllte Kunststoffe sowie Formkörper, die unter Einsatz eines erfindungsgemäßen Mittels erhältlich sind.

Darüber hinaus sind Artikel, die auf mindestens einem solchen erfindungsgemäßen Polymer, Kunststoff und/oder Formkörper basieren, Gegenstand der vorliegenden Erfindung.

So können durch die vorliegende Erfindung die Scorch-Bedingungen nochmals deutlich verbessert werden.

Insbesondere erzielt man durch den Einsatz des erfindungsgemäßen Mittels eine erhebliche Verbesserung der Fließeigenschaften. Der dafür charakteristische MFR-Wert ("Melt Flow Ratio" bzw. Schmelzeindex MFI) nimmt zu, die Viskosität der Polymermasse somit ab. Durch Verwendung erfindungsgemäßer Mittel ergeben sich in der Regel auch niedrigere Kopfdrücke am Ausgang des Extruders im Vergleich zu Pfropfungen nach dem Stand der Technik, was die Ausstoßleistung an Endprodukten erhöht sowie die mechanische Beanspruchung des eingesetzten Werkzeugs reduziert. Mit der so erzielten niedrigeren Viskosität lassen sich zudem Spritzgussformkörper besser bzw. überhaupt herstellen. Ein weiterer Vorteil der vorliegenden Erfindung liegt in der verminderten Neigung bezüglich Vernetzung vor einer Wasserlagerung, was sich durch eine verminderte Schmelzeviskosität makroskopisch in einer qualitativ besseren Produktoberfläche widerspiegelt. Indiz ist hierbei der niedrigere Gelgehalt. Darüber hinaus werden bei Verwendung erfindungsgemäßer Mittel Probekörper bzw. Produkte erhalten, die sich durch eine außerordentlich gute Oberflächenbeschaffenheit auszeichnen, wobei die Vernetzungsqualität/-quantität nicht nachteilig beeinflusst wird.

All diese Vorteile kann man ebenfalls bei der direkten Herstellung von Formteilen in einem Schritt beobachten. Ebenso bei der Produktion von silangepfropften Polymeren, der Produktion von gefüllten thermoplastischen und/oder feuchtigkeitsvernetzenden Polymerzubereitungen sowie bei der Weiterverarbeitung von Produkten in einem zweiten Formgebungsschritt sind die oben genannten Vorteile zu beobachten.

Von besonderem Vorteil ist die Tatsache, dass sich die erfindungsgemäßen Mittel in verkaufsüblichen Basisrohstoffen und Vernetzerzubereitungen, wie Vinylsilan oder Vinylsilanzubereitungen, z. B. vom Typ DYNASYLAN^{®} SILFIN, mit Vernetzungskatalysatoren und/oder weiteren Additiven, wie Stabilisatoren, auflösen lassen, oder in Form von Masterbatches gemeinsam mit anderen Zuschlagstoffen zusetzen lassen.

Damit sind die neuen Zubereitungen in vorhandenen Produktionsanlagen im Tausch gegen herkömmliche Zubereitungen in vorteilhafter Weise verwendbar, ohne wesentliche Änderung der Verfahrensbedingungen durchführen zu müssen.

Die vorliegende Erfindung wird durch die nachfolgenden Beispiele näher erläutert, ohne den Gegenstand der Erfindung zu beschränken:

### Beispiele

### Erläuterungen zu den Beispielen A und B

**Für die Ausprüfungen wurden folgende Messmethoden angewendet**

| | | |
|---|---|---|
| MFR (Schmelzindex bei 21,6 kg und 190 °C) | [g/10 min] | DIN 1133 |
| Hot-Set (200 °C; 15 min; 20 N/cm²) | [%] | EN ISO 60811-2-1 |
| Gelgehalt (siedendes p-Xylol, 8 h) | [%] | DIN 16 892 |

**Tabelle 1 - Einsatzstoffe**

| Bezeichnung | Beschreibung | |
|---|---|---|
| PE 1 | PE-LLD, BPD 3042 von BP Chemicals | |
| PE 2 | PE-LLD, Flexirene^{®} MR 50, Polimeri Europa | |
| VTMO | Vinyltrimethoxysilan, Degussa AG | |
| Radikalfänger 1 | Hydrochinon | |
| Radikalfänger 2 | 2,4-Diphenyl-4-methyl-1-penten | |
| Peroxid 1 | Di(tert.-butyl)peroxid, Peroxid Chemie | |
| Peroxid 2 | 2,5-Dimethyl-2,5-di(tert.-butylperoxy)-hexan, Peroxid Chemie | |
| Peroxid 3 | tert.-Butylcumylperoxid, Peroxid Chemie | |
| Peroxid 4 | 1,3-Di(2-tert.-butylperoxy-isopropyl)benzol, Peroxid Chemie | |
| DBTL | Dibutylzinndilaurat, Th. Goldschmidt | |
| Zubereitung 1 | VTMO | 86,4 % |
| | Peroxid 2 | 10,4 % |
| | Radikalfänger 2 | 2,58 % |
| | DBTL | 3,2 % |
| Zubereitung 2 | VTMO | 87,7 % |
| | Peroxid 1 | 7,3 % |
| | Radikalfänger 1 | 1,8 % |
| | DBTL | 3,2 % |
| Zubereitung 3 | VTMO | 92,4 % |
| | Peroxid 1 | 4,4 % |
| | DBTL | 3,2 % |
| Zubereitung 4 | VTMO | 90,15 % |
| | Peroxid 3 | 6,55 % |
| | DBTL | 3,2 % |
| Zubereitung 5 | VTMO | 96,6 % |
| | Peroxid 2 | 4,72 % |
| | Radikalfänger 2 | 1,58 % |
| | DBTL | 3,2 % |
| Zubereitung 6 | VTMO | 91,62 % |
| | Peroxid 4 | 5,18 % |
| | DBTL | 3,2 % |

### Beispiel A

Mit der erfindungsgemäßen Zubereitung 1 werden vergleichende Untersuchungen zu JP-A 09-302 043 durchgeführt. Hierzu wurden neben Löslichkeitsuntersuchungen auch Extrusionsuntersuchungen durchgeführt. Bei den Extrusionsuntersuchungen wurde allerdings nicht das in JP-A 09-302 043 erwähnte PE-HD verwendet, da aufgrund von Erfahrungswerten die Verwendung der darin erwähnten Peroxidmengen zu verstärkten Vorvernetzungsreaktionen im Extruder und somit auch zu massiven Verarbeitungsproblemen führen würde. Die Erfinder haben sich deshalb für die Verwendung eines niederviskosen Spritzgusstyps (PE 2) entschieden.

### A1 Lösungsprobleme von Hydrochinon (Radikalfänger 1) in VTMO (Vinyltrimethoxysilan)

Die Lösungsversuche erfolgen bei Raumtemperatur und Umgebungsdruck, indem zunächst 5 g VTMO in einem Reagenzglas vorgelegt werden. Der Radikalfänger 1 wird anschließend in 0,2-g-Portionen dem Lösungsmittel zugegeben. Die Lösung des Radikalfängers 1 erfolgt schon bei kleinen Zugabemengen sehr zögerlich. Die Lösungsgrenze ist bei ca. 1,2 g erreicht. Dies entspricht einer maximal möglichen Konzentration von 2,4 Gew.-% Hydrochinon in VTMO (bei Raumtemperatur und Umgebungsdruck).

Vergleichbare Untersuchungen werden exemplarisch mit 2,4-Diphenyl-4-methyl-1-penten (Radikalfänger 2) unter gleichen Bedingungen durchgeführt. Es zeigt sich, dass die beiden Komponenten (VTMO, Radikalfänger 2) in jedem möglichen Verhältnis problemlos mischbar sind.

### A2 Vergleichende Extrusionsuntersuchung mit Zubereitung gemäß JP-A 09-302 043und der erfindungsgemäßen Zubereitung 1

PE 2 wird in einem Umlufttrockenschrank bei einer Temperatur von 70 °C über einen Zeitraum von 1 Stunde gelagert. Jeweils 12 g pro kg PE 2 der Zubereitungen 1 und 2 werden dem getrockneten PE 2 zugegeben und über einen Zeitraum von 1 Stunde durch das PE2 aufgesaugt. Die Verarbeitung erfolgt auf einem gleichsinnig drehenden Doppelschnecken-Extruder der Firma Berstorff (Länge/Schneckendurchmesser = 33, Schneckendurchmesser = 25 mm). Die Drehzahlen betragen 100 U/min, und die Temperaturen steigen von 135 bis 210 °C in Richtung Extruderausgang. Die Dosierung des die jeweilige Zubereitung beinhaltenden Polyethylens in den Extruder erfolgt gravimetrisch und beträgt 4 kg/h. Es werden Bänder hergestellt.

Direkt nach der Extrusion werden die MFR-Werte (21,6 kg und 190 °C) sowie die Gelgehalte bestimmt. Die sich ergebenden Extruder-Kopfdrücke werden während des jeweiligen Aufbereitungsschritts notiert. Die Bänder werden in einem Wasserbad vernetzt (6 Stunden, 80 °C) und anschließend der Hot-Set und der Gelgehalt der vernetzten Proben bestimmt.

Die Untersuchungsergebnis sind in der folgenden Tabelle 2 aufgelistet.

**Tabelle 2**

| Polyethylen | Zubereitung | Zugabemenge | Kopfdrücke | Gelgehalt 0 h | Gelgehalt 6 h. 80 °C H₂O | Hot-Set | MFR 21.6/190 °C |
|---|---|---|---|---|---|---|---|
| | | [g/kg PE] | [bar] | [%] | [%] | [%] | [g/10 min] |
| PE 2 | 2 | 12 | 16 | 0 | 39,2 | Probe > 175 nicht gerissen | 1,1 |
| | 1 | 12 | 8 | 0 | 0,2 | gerissen | 9,2 |

Aus den Ergebnissen ist deutlich zu sehen, dass die Zubereitung gemäß JP-A 09-302 043 zu keinerlei Vernetzung führt. Im Gegensatz dazu kann mit der erfindungsgemäßen Zubereitung 1 die Vernetzung der Proben realisiert werden.

### Beispiel B

### Versuche mit verschiedenen ESR mit und ohne Radikalfänger

PE 1 wird in einem Umlufttrockenschrank bei einer Temperatur von 70 °C über einen Zeitraum von 1 Stunde gelagert. Jeweils 10 g/kg PE 1 der Zubereitungen 3, 4, 5 und 6 werden dem getrockneten PE 1 zugegeben und über einen Zeitraum von 1 Stunde durch das PE 1 aufgesaugt. Die Verarbeitung erfolgt auf einem gleichsinnig drehenden Doppelschnecken-Extruder der Firma Berstorff (Länge/Schneckendurchmesser = 33, Schneckendurchmesser = 25 mm). Die Drehzahlen betragen 100 U/min, und die Temperaturen steigen von 135 bis 210 °C in Richtung Extruderausgang. Die Dosierung des die jeweilige Zubereitung beinhaltenden Polyethylens in den Extruder erfolgt gravimetrisch und beträgt 4 kg/h. Es werden Bänder hergestellt.

Direkt nach der Extrusion werden die MFR-Werte (21,6 kg und 190 °C) sowie die Gelgehalte bestimmt. Die sich ergebenden Extruder-Kopfdrücke werden während des jeweiligen Aufbereitungsschritts notiert. Die Bänder werden in einem Wasserbad vernetzt (6 Stunden, 80 °C) und anschließend der Hot-Set und der Gelgehalt der vernetzten Proben bestimmt.

Die Untersuchungsergebnis sind in der folgenden Tabelle 3 aufgelistet.

**Tabelle 3**

| Polyethylen | Zubereitung | Zugabemenge | Kopfdrücke | Gelgehalt 6 h. 80 °C H₂O | Hot-Set | MFR 21.6/190 °C |
|---|---|---|---|---|---|---|
| | | [g/kg PE] | [bar] | [%] | [%] | [g/10 min] |
| PE 1 | 3 | 10 | 19-20 | 58 | 80 | 34 |
| | 4 | 10 | 20 | 60 | 90 | 31 |
| | 5 | 10 | 18-19 | 57 | 75 | 40 |
| | 6 | 10 | 19-20 | 60 | 75 | 34 |

### Zusammenfassung der Versuchsergebnisse

Bei Vergleich der Werte zeigt sich der Vorteil der erfindungsgemäßen Zubereitung 5 deutlich. Durch die Verwendung der erfindungsgemäßen Zubereitung 5 ergeben sich im Vergleich zu allen anderen Zubereitungen die niedrigsten Viskositäten, wobei die Endeigenschaften aller Proben vergleichbar gut sind.

Praktisch bedeutet dies, dass bei der Verwendung der Zubereitung 5 eine höhere Ausstoßleistung (wirtschaftlicher Vorteil) und Oberflächengüte des Extrudats möglich ist, ohne die Endeigenschaften des Produkts negativ zu beeinflussen.

## Patentansprüche

1. Mittel, das als Komponenten
(i) mindestens eine Silicium-enthaltende Verbindung, welche eine Silicium-gebundene, ungesättigte Organogruppe trägt,
(ii) mindestens einen peroxidischen Radikalstarter und
(iii) mindestens einen konjugierten Kohlenwasserstoff und/oder mindestens ein organofunktionelles Silan der allgemeinen Formel I
R-Xₙ-C(R)=C(R)-C(R)=C(R)-Xₙ-Si(R¹)ₘ(OR²)₍₃₋ₘ₎ (I),
worin Gruppen R gleich oder verschieden sind und R ein Wasserstoffatom oder eine Alkylgruppe mit 1 bis 3 C-Atomen oder eine Arylgruppe oder eine Aralkylgruppe bedeutet, R¹ eine lineare oder verzweigte Alkylgruppe mit 1 bis 4 C-Atomen ist, R² für eine lineare, verzweigte oder cyclische Alkylgruppe mit 1 bis 8 C-Atomen steht, Gruppen X gleich oder verschieden sind und X eine Gruppe aus der Reihe -CH₂-, -(CH₂)₂-, - (CH₂)₃-, -O(O)C(CH₂)₃- oder -C(O)O-(CH₂)₃- darstellt, n gleich 0 oder 1 und m gleich 0 oder 1 oder 2 oder 3 sind,
enthält.

2. Mittel nach Anspruch 1,
**dadurch gekennzeichnet,**
**dass** das Mittel gegebenenfalls als Komponente (iv) mindestens einen Katalysator zur Vernetzung von auf Polymer gepfropfte Silyl-Gruppen enthält.

3. Mittel nach Anspruch 2,
**dadurch gekennzeichnet,**
**dass** das Mittel als Komponente (iv) Di-n-butylzinnlaurat, Dibutylzinndiacetat, Dioctyldibutylamin, Hexylamin, Pyridin, Chlorwasserstoffsäure, Schwefelsäure, Essigsäure, Stearinsäure, Maleinsäure, Maleinsäureanhydrid und/oder Toluolsulfonsäure enthält.

4. Mittel nach Anspruch mindestens einem der Ansprüche 1 bis 3,
**dadurch gekennzeichnet,**
**dass** das Mittel als Komponente (i) mindestens eine Silicium-enthaltende Verbindung der allgemeinen Formel II
(R³)₂C=C(R³)-Yₚ-Si(R⁴)ₜ(OR⁵)(₃₋ₜ) (II),
worin Gruppen R³ gleich oder verschieden sind und R³ ein Wasserstoffatom oder eine Methylgruppe oder eine Phenylgruppe bedeutet, R⁴ eine Methylgruppe ist, R⁵ für eine Methyl-, Ethyl-, n-Propyl- oder i-Propylgruppe steht, Gruppen Y gleich oder verschieden sind und Y eine Gruppe aus der Reihe -CH₂-, -(CH₂)₂-, -(CH₂)₃-, -O(O)C(CH₂)₃- oder -C(O)O-(CH₂)₃- darstellt, p gleich 0 oder 1 und t gleich 0 oder 1 sind,
enthält.

5. Mittel nach Anspruch 4,
**dadurch gekennzeichnet,**
**dass** das Mittel als Komponente (i) Vinyltrimethoxysilan, Vinyltriethoxysilan, 3-Methacryloxypropyltriethoxysilan, 3-Methacryloxypropyltrimethoxysilan, Vinyltriacetoxysilan und/oder Vinylethoxydimethoxysilan enthält.

6. Mittel nach mindestens einem der Ansprüche 1 bis 5,
**dadurch gekennzeichnet,**
**dass** das Mittel als Komponente (ii) mindestens einen peroxidischen Radikalstarter aus der Reihe Ditertiärbutylperoxid, Dicumylperoxid, Tertiärbutylcumylperoxid, 1,3-Di(2-tertiärbutylperoxy-isopropyl)benzol, 2,5-Dimethyl-2,5-bis(tertiärbutylperoxy)-hexin(3), Di-tertiäramylperoxid, 1,3,5-Tris(2-tertiärbutylperoxy-isopropyl)benzol, 1-Phenyl-1-tertiärbutylperoxy-phthalid, α,α'-Bis(tertiärbutylperoxy)-diisopropyl-benzol und 2,5-Dimethyl-2,5-di-tertiärbutylperoxy-hexan enthält.

7. Mittel nach mindestens einem der Ansprüche 1 bis 6,
**dadurch gekennzeichnet,**
**dass** das Mittel als Komponente (iii) mindestens einen konjugierten Kohlenwasserstoff enthält, welcher aus einer ein- oder mehrfach ungesättigten Kohlenwasserstoffkette und mindestens einer aromatischen Kohlenwasserstoffgruppe besteht.

8. Mittel nach mindestens einem der Ansprüche 1 bis 7,
**dadurch gekennzeichnet,**
**dass** das Mittel als Komponente (iii) mindestens einen konjugierten Kohlenwasserstoff aus der Reihe 1-Phenyl-penten-1, 2-Phenyl-penten-1, 1,2-Diphenylpenten-1, 1,3-Diphenylpenten-1, 1,4-Diphenylpenten-1, 1,5-Diphenylpenten-1, 1-Phenylpentadien-1,3, 2-Phenylpentadien-1,3, 3-Phenylpentadien-1,3, 4-Phenylpentadien-1,3, 5-Phenylpentadien-1,3, 1,2-Diphenylpentadien-1,3, 1,3-Diphenylpentadien-1,3, 1,4-Diphenylpentadien-1,3, 1,5-Diphenylpentadien-1,3, 2,4-Diphenyl-4-methyl-2-penten, 2,4-Diphenyl-4-methyl-1-penten oder trans,trans-1,4-Diphenyl-1,3-butadien enthält.

9. Mittel nach mindestens einem der Ansprüche 1 bis 8,
**dadurch gekennzeichnet,**
**dass** das Mittel als Komponenten
(i) 60 bis 99,9 Gew.-% mindestens einer Silicium-enthaltenden Verbindung der allgemeinen Formel (II),
(ii) 0,05 bis 10 Gew.-% mindestens eines peroxidischen Radikalstarters,
(iii) 0,01 bis 10 Gew.-% mindestens eines konjugierten Kohlenwasserstoffs und/oder eines organofunktionellen Silans der allgemeinen Formel (I), und
(iv) gegebenenfalls 0,1 bis 10 Gew.-% mindestens eines Katalysators enthält, wobei sich die Mengenangaben auf das gesamte Mittel beziehen und alle Bestandteile des Mittels zusammen 100 Gew.-% ergeben.

10. Mittel nach mindestens einem der Ansprüche 1 bis 9,
**dadurch gekennzeichnet,**
**dass** das Gewichtsverhältnis zwischen den Komponenten (ii) und (iii) 20 : 1 bis 1 : 15 beträgt.

11. Mittel nach mindestens einem der Ansprüche 1 bis 10,
**dadurch gekennzeichnet,**
**dass** das Mittel gegebenenfalls als weitere Komponenten mindestens einen thermischen Stabilisator und/oder einen Metalldesaktivator enthält.

12. Verwendung eines Mittels nach den Ansprüchen 1 bis 11 bei der Herstellung gepfropfter und/oder vernetzter Polymeren.

13. Verwendung eines Mittels nach den Ansprüchen 1 bis 11 bei der Herstellung gefüllter Kunststoffe.

14. Sioplas-Prozess, **gekennzeichnet durch** den Einsatz eines Mittels nach den Ansprüchen 1 bis 13.

15. Monosil-Prozess, **gekennzeichnet durch** den Einsatz eines Mittels nach den Ansprüchen 1 bis 13.

16. Polymere oder gefüllte Kunststoffe erhältlich nach einem der Ansprüche 12 bis 15.

17. Formkörper erhältlich nach einem der Ansprüche 12 bis 15.

18. Artikel, die auf mindestens einem Polymer, Kunststoffen und/oder Formkörpern nach den Ansprüchen 12 bis 17 basieren.

## Claims

1. Composition in which the components present are
(i) at least one silicon-containing compound, which bears a silicon-bonded unsaturated organic group.
(ii) at least one peroxidic free-radical initiator, and
(iii) at least one conjugated hydrocarbon and/or at least one organofunctional silane of the general formula I
R-Xₙ-C(R)=C(R)-C(R)=C(R)-Xₙ-Si(R¹)ₘ(OR²)₍₃₋ₘ₎ (I),
where the groups R are identical or different and R is a hydrogen atom or an alkyl group having from 1 to 3 carbon atoms or an aryl group or an aralkyl group, R¹ is a linear or branched alkyl group having from 1 to 4 carbon atoms, R² is a linear, branched, or cyclic alkyl group having from 1 to 8 carbon atoms, the groups X are identical or different, and X is a group selected from the series -CH₂-, -(CH₂)₂-, -(CH₂)₃-, -O(O)C(CH₂)₃- and -C(O)O-(CH₂)₃-, and n is 0 or 1, and m is 0, 1, 2 or 3.

2. Composition according to Claim 1,
**characterized in that**
where appropriate, at least one catalyst for crosslinking of silyl groups grafted onto polymer is present as component (iv).

3. Composition according to Claim 2,
**characterized in that**
component (iv) present is di-n-butyltin laurate, bibutyltin diacetate, dioctyldibutylamine, hexylamine, pyridine, hydrochloric acid, sulfuric acid, acetic acid, stearic acid, maleic acid, maleic anhydride, and/or toluenesulfonic acid.

4. Composition according to at least one of Claims 1 to 3, **characterized in that** at least one silicon-containing compound of the general formula II
(R³)₂C=C(R³)-Yₚ-Si(R⁴)ₜ(OR⁵)₍₃₋ₜ₎ (II),
where the groups R³ are identical or different and R³ is a hydrogen atom or a methyl group or a phenyl group, R⁴ is a methyl group, R⁵ is a methyl, ethyl, n-propyl, or isopropyl group, and the groups Y are identical or different and Y is a group selected from the series -CH₂-, -(CH₂)₂-, -(CH₂)₃-, -O(O)C(CH₂)₃- and -C(O)O-(CH₂)₃-, and p is 0 or 1, and t is 0 or 1,
is present as component (i).

5. Composition according to Claim 4,
**characterized in that**
vinyltrimethoxysilane, vinyltriethoxysilane, 3-methacryloxypropyltriethoxysilane, 3-methacryloxypropyltrimethoxysilane, vinyltriacetoxysilane, and/or vinylethoxydimethoxysilane is present as component (i).

6. Composition according to at least one of Claims 1 to 5
**characterized in that**
at least one peroxidic free-radical initiator from the series di-tert-butyl peroxide, dicumyl peroxide, tert-butyl cumyl peroxide, 1,3-di(2-tert-butylperoxyisopropyl)benzene,2,5-dimethyl-2,5-bis(tert-butylperoxy)hex-3-yne, di-tert-amyl peroxide, 1,3,5-tris(2-tert-butylperoxyisopropyl)benzene, 1-phenyl-1-tert-butylperoxyphthalide, α,α'-bis(tert-butylperoxy)-diisopropylbenzene, and 2,5-dimethyl-2,5-di-tert-butylperoxyhexane is present as component (ii).

7. Composition according to at least one of Claims 1 to 6,
**characterized in that**
at least one conjugated hydrocarbon which is composed of a mono- or polyunsaturated hydrocarbon chain and of at least one aromatic hydrocarbon group is present as component (iii).

8. Composition according to at least one of Claims 1 to 7, **characterized in that**
at least one conjugated hydrocarbon selected from the series 1-phenylpent-1-ene, 2-phenylpent-1-ene, 1,2-diphenylpent-1-ene, 1,3-diphenylpent-1-ene, 1,4-diphenylpent-1-ene, 1,5-diphenylpent-1-ene, 1-phenylpenta-1,3-diene, 2-phenylpenta-1,3-diene, 3-phenylpenta-1,3-diene, 4-phenylpenta-1,3-diene, 5-phenylpenta-1,3-diene, 1,2-diphenylpenta-1,3,diene, 1,3-diphenylpenta-1,3-diene, 1,4-diphenylpenta-1,3-diene, 1,5-diphenylpenta-1,3-diene, 2,4-diphenyl-4-methylpent-2-ene, 2,4-diphenyl-4-methylpent-1-ene, and trans,trans-1,4-diphenylbuta-1,3-diene is present as component (iii) .

9. Composition according to at least one of Claims 1 to 8,
**characterized in that**
(i) from 60 to 99.9% by weight of at least one silicon-containing compound of the general formula (II) is present as component (i),
(ii) from 0.05 to 10% by weight of at least one peroxidic free-radical initiator is present as component (ii),
(iii)from 0.01 to 10% by weight of at least one conjugated hydrocarbon and/or of an organofunctional silane of the general formula (I) is present as component (iii), and
(iv) where appropriate, from 0.1 to 10% by weight of at least one catalyst is present as component (iv),
where the amounts stated are based on the entirety of the agent, and all the constituents of the agent together give 100% by weight.

10. Composition according to at least one of Claims 1 to 9,
**characterized in that**
the ratio by weight between components (ii) and (iii) is from 20:1 to 1:15.

11. Composition according to at least one of Claims 1 to 10,
**characterized in that**
other components present, where appropriate, are at least one heat stabilizer and/or one metal deactivator.

12. Use of a composition according to Claims 1 to 11 in the preparation of grafted and/or crosslinked polymers.

13. Use of a composition according to Claims 1 to 11 in producing filled plastics.

14. Sioplas process **characterized by** the use of a composition according to Claims 1 to 13.

15. Monosil process **characterized by** the use of a composition according to Claims 1 to 13.

16. Polymers or filled plastics obtainable according to any of Claims 12 to 15.

17. Molding obtainable according to any of Claims 12 to 15.

18. Items based on at least one polymer, plastics, and/or moldings according to Claims 12 to 17.

## Revendications

1. Agent qui contient comme composants :
(i) au moins un composé contenant du silicium qui porte un groupe organo insaturé lié au silicium,
(ii) au moins un initiateur radicalaire peroxydique et
(iii)au moins un hydrocarbure conjugué et/ou au moins un silane organofonctionnel de formule générale I :
R-Xₙ-C(R)=C(R)-C(R)=C(R)-Xₙ-Si(R¹)ₘ(OR²)₍₃₋ₘ₎ (I)
dans laquelle les groupes R sont identiques ou différents et R désigne un atome d'hydrogène ou un groupe alkyle avec 1 à 3 atomes de C, un groupe aryle ou un groupe aralkyle, R¹ désigne un groupe alkyle linéaire ou ramifié avec 1 à 4 atomes de C, R² représente un groupe alkyle linéaire, ramifié ou cyclique avec 1 à 8 atomes de C, les groupes X sont identiques ou différents et X désigne un groupe de la série -CH₂-, -(CH₂)₂-, -(CH₂)₃-, -O(O)C(CH₂)₃- ou -C(O)O-(CH₂)₃-, n est égal à 0 ou 1 et m est égal à 0, 1, 2 ou 3.

2. Agent selon la revendication 1,
**caractérisé en ce**
**que** l'agent contient éventuellement comme composant (iv) au moins un catalyseur pour la réticulation de groupes silyle greffés sur le polymère.

3. Agent selon la revendication 2,
**caractérisé en ce**
**que** l'agent contient comme composant (iv) du laurate de di-n-butylétain, du diacétate de dibutylétain, de la dioctyldibutylamine, de l'hexylamine, de la pyridine, de l'acide chlorhydrique, de l'acide sulfurique, de l'acide acétique, de l'acide stéarique, de l'acide maléique, de l'anhydride d'acide maléique et/ou de l'acide toluènesulfonique.

4. Agent selon au moins l'une des revendications 1 à 3,
**caractérisé en ce**
**que** l'agent contient comme composant (i) au moins un composé contenant du silicium selon la formule générale II :
(R³)₂C=C(R³)-Yₚ-Si(R⁴)ₜ(OR⁵)₍₃₋ₜ₎ (II)
dans laquelle les groupes R³ sont identiques ou différents et R³ désigne un atome d'hydrogène, un groupe méthyle ou un groupe phényle, R⁴ désigne un groupe méthyle, R⁵ représente un groupe méthyle, éthyle, n-propyle ou i-propyle, les groupes Y sont identiques ou différents et Y désigne un groupe de la série -CH₂-, -(CH₂)₂-, -(CH₂)₃-, -O(O)C(CH₂)₃- ou - C(O)O-(CH₂)₃-, p est égal à 0 ou 1 et t est égal à 0 ou 1.

5. Agent selon la revendication 4,
**caractérisé en ce**
**que** l'agent contient comme composant (i) du vinyltriméthoxysilane, du vinyltriéthoxysilane, du 3-méthacryloxypropyltriéthoxysilane, du 3-méthacryloxypropyltriméthoxysilane, du vinyltriacétoxysilane et/ou du vinyléthoxydiméthoxysilane.

6. Agent selon au moins l'une des revendications 1 à 5,
**caractérisé en ce**
**que** l'agent contient comme composant (ii) au moins un initiateur radicalaire peroxydique de la série di-tert.-butylperoxyde, dicumylperoxyde, tert.-butylcumylperoxyde, 1,3-di(2-tert.-butylperoxyisopropyl)benzène, 2,5-dimétyl-2,5-bis(tert.-butylperoxy)-hexine(3), di-tert.amylperoxyde, 1,3,5-tris(2-tert.-butylperoxyisopropyl)benzène, 1-phényl-1-tert.-butylperoxyphtalide, α,α'-bis(tert.-butylperoxy)-diisopropylbenzène et 2,5-diméthyl-2,5-di-tert.-butylperoxyhexane.

7. Agent selon au moins l'une des revendications 1 à 6,
**caractérisé en ce**
**que** l'agent contient comme composant (iii) au moins un hydrocarbure conjugué qui se compose d'une chaîne hydrocarbure mono- ou polyinsaturée et d'au moins un groupe hydrocarbure aromatique.

8. Agent selon au moins l'une des revendications 1 à 7,
**caractérisé en ce**
**que** l'agent contient comme composant (iii) au moins un hydrocarbure conjugué de la série 1-phénylpentène-1, 2-phénylpentène-1, 1,2-diphénylpentène-1, 1,3-diphénylpentène-1, 1,4-diphénylpentène-1, 1,5-diphénylpentène-1, 1-phénylpentadiène-1,3, 2-phénylpentadiène-1,3, 3-phénylpentadiène-1,3, 4-phénylpentadiène-1,3, 5-phénylpentadiène-1,3, 1,2-diphénylpentadiène-1,3, 1,3-diphénylpentadiène-1,3, 1,4-diphénylpentadiène-1,3, 1,5-diphénylpentadiène-1,3, 2,4-diphényl-4-méthyl-2-pentène, 2,4-diphényl-4-méthyl-1-pentène ou trans,trans-1,4-diphényl-1,3-butadiène.

9. Agent selon au moins l'une des revendications 1 à 8,
**caractérisé en ce**
**que** l'agent contient comme composants :
(i) 60 à 99,9 % en poids d'au moins un composé contenant du silicium de formule générale (II),
(ii) 0,05 à 10 % en poids d'au moins un initiateur radicalaire peroxydique,
(iii) 0,01 à 10 % en poids d'au moins un hydrocarbure conjugué et/ou d'un silane organofonctionnel de formule générale (I) et
(iv) éventuellement, 0,1 à 10 % en poids d'au moins un catalyseur, les données quantitatives se rapportant à l'agent complet et tous les composants de l'agent donnant ensemble 100 % en poids.

10. Agent selon au moins l'une des revendications 1 à 9,
**caractérisé en ce**
**que** le rapport pondéral entre les composants (ii) et (iii) est de 20:1 à 1:15.

11. Agent selon au moins l'une des revendications 1 à 10,
**caractérisé en ce**
**que** l'agent contient éventuellement au moins un stabilisateur thermique et/ou un désactivateur métallique comme autres composants.

12. Utilisation d'un agent selon l'une des revendications 1 à 11 pour la préparation de polymères greffés et/ou réticulés.

13. Utilisation d'un agent selon l'une des revendications 1 à 11 pour la préparation de plastiques chargés.

14. Procédé Sioplas, **caractérisé par** l'utilisation d'un agent selon l'une des revendications 1 à 13.

15. Procédé Monosil, **caractérisé par** l'utilisation d'un agent selon l'une des revendications 1 à 13.

16. Polymères ou plastiques chargés obtenus selon l'une des revendications 12 à 15.

17. Corps moulés obtenus selon l'une des revendications 12 à 15.

18. Articles, qui se basent sur au moins un polymère, des plastiques et/ou des corps moulés selon l'une des revendications 12 à 17.
